# EUROPÄISCHE PATENTSCHRIFT

(11) **EP 2 783 124 B1**
(45) Veröffentlichungstag und Bekanntmachung des Hinweises auf die Patenterteilung: **04.01.2017**
(21) Anmeldenummer: 12788220.7
(22) Anmeldetag: 21.11.2012
(51) Int. Cl.: F16D 25/06, F16D 48/02

(54) **AKTUATORANORDNUNG FÜR EINEN KRAFTFAHRZEUG-ANTRIEBSSTRANG MIT ANSTEUERVERFAHREN HIERFÜR**
ACTUATOR ASSEMBLY FOR A MOTOR VEHICLE DRIVE TRAIN HAVING A CONTROL METHOD THEREFOR
DISPOSITIF D'ACTIONNEMENT POUR CHAÎNE CINÉMATIQUE DE VÉHICULE AUTOMOBILE, ET PROCÉDÉ DE COMMANDE CORRESPONDANT

(30) Priorität: 22.11.2011 DE 102011119631
(43) Veröffentlichungstag der Anmeldung: 01.10.2014
(73) Patentinhaber: Getrag Getriebe Und Zahnradfabrik Hermann Hagenmeyer GmbH & Cie. KG, 74199 Untergruppenbach (DE)
(72) Erfinder: ROTHVOSS, Stefan, 71711 Steinheim (DE); ECKWEILER, Klaus, 74199 Untergruppenbach (DE); TRUTSCHEL, Ralf, 34311 Naumburg (DE)
(74) Vertreter: Witte, Weller & Partner Patentanwälte mbB
(86) Internationale Anmeldenummer: PCT/EP2012/073222
(87) Internationale Veröffentlichungsnummer: WO 2013/076135

(56) Entgegenhaltungen:
- EP-A2- 1 253 341
- DE-A1- 10 316 419
- DE-A1-102007 009 542

## Beschreibung

Die vorliegende Erfindung betrifft eine Aktuatoranordnung für einen Kraftfahrzeug-Antriebsstrang, insbesondere für eine Doppelkupplungsanordnung, mit einem ersten Fluidzylinder, der über eine erste Fluidverbindung mit einer Fluidversorgungseinrichtung verbunden ist, mit einem zweiten Fluidzylinder, der über eine zweite Fluidverbindung mit der Fluidversorgungseinrichtung verbunden ist, und mit einer Druckmessanordnung, sowie ein Verfahren zum Ansteuern einer Doppelkupplungsanordnung mittels einer Aktuatoranordnung dieser Art.

Aktuatoranordnungen dieser Art sind zur Betätigung von Doppelkupplungsanordnungen von Doppelkupplungsgetrieben für Kraftfahrzeuge bekannt. Derartige Doppelkupplungsanordnungen weisen eine erste und eine zweite Reibkupplung auf, die unabhängig voneinander betätigbar sind. Hierzu weist die Fluidversorgungseinrichtung in der Regel ein erstes Druckregelventil zum Regeln des Druckes in der ersten Fluidverbindung und ein zweites Druckregelventil zum Regeln des Druckes in der zweiten Fluidverbindung auf. Die Druckregelventile sind üblicherweise an einen Leitungsdruck angeschlossen, der bspw. mittels einer Pumpe in Kombination mit einem Leitungs-Druckregelventil oder in Verbindung mit einem Druckspeicher erzeugt wird.

Der Druck in den Fluidverbindungen entspricht dem jeweiligen Druck in Zylinderkammern der Fluidzylinder. Der Druck entspricht damit einer Betätigungskraft zum Betätigen der jeweiligen Reibkupplung bzw. einem von der Reibkupplung übertragbaren Drehmoment.

Die Reibkupplungen können als trockene Reibkupplungen klassischer Bauweise oder als nass laufende Lamellenkupplungen realisiert sein.

Bei Doppelkupplungsgetrieben werden die Reibkupplungen überschneidend betätigt, um den Leistungsfluss von einem Teilgetriebe (bspw. für die ungeraden Gangstufen) auf ein zweites Teilgetriebe (bspw. für die geraden Gangstufen) zu übertragen, und zwar ohne Zugkrafteinbruch. Hierdurch können Gangwechsel vollzogen werden, ohne dass eine Zugkraftunterbrechung stattfindet.

Für die überschneidende Betätigung der zwei Reibkupplungen ist es vorteilhaft, wenn der Betätigungsdruck bzw. das von den Reibkupplungen übertragene Drehmoment genau eingestellt, vorzugsweise geregelt werden kann.

Hierzu ist es bekannt, der ersten Fluidverbindung einen ersten Drucksensor zuzuordnen, und der zweiten Fluidverbindung einen zweiten Drucksensor zuzuordnen. Die zwei Drucksensoren bilden dabei eine Druckmessanordnung.

Die Drucksensoren ermitteln jeweilige Ist-Drücke, die in einem elektronischen Regler mit jeweiligen Solldrücken verglichen werden, wobei die hieraus gebildete Regelabweichung zur Ansteuerung des jeweiligen Druckregelventils verwendet wird.

Aus dem Dokument EP 1 253 341 A2 ist eine Aktuatoranordnung bekannt, bei der eine Drucksensoranordnung für eine Doppelkupplungsanordnung mit nur einem einzigen Drucksensor realisiert ist. Dabei wird mittels eines Steuerventils, das von einer Steuereinrichtung angesteuert wird, der Drucksensor mit dem Fluidsystem des Aktuators für die erste Kupplung der Doppelkupplungsanordnung oder die zweite Kupplung der Doppelkupplungsanordnung verbunden, um den dort jeweils herrschenden Fluiddruck zu erfassen.

Aus dem Dokument DE 10 2007 009 542 A1 ist eine Druckmittelsteuereinrichtung bekannt, die ein Druckmittel zumindest einem Druckmittelverbraucher definiert zuführt, um durch den Druckmittelverbraucher einen Kraftfluss in einem Antriebsstrang eines Fahrzeugs einzustellen. Dabei ist ein Drucksensor vorgesehen, mit dem eine Druckdifferenz zwischen einem bei dem Druckmittelverbraucher vorliegenden Druck und einem bei einer Druckmittelquelle vorliegenden Druck erfassbar ist.

Vor diesem Hintergrund ist es eine Aufgabe der Erfindung, eine verbesserte, insbesondere kostengünstigere Aktuatoranordnung sowie ein zugeordnetes Ansteuerverfahren anzugeben.

Diese Aufgabe wird bei der eingangs genannten Aktuatoranordnung dadurch gelöst, dass die Druckmessanordnung einen einzelnen Drucksensor aufweist, der über eine Verbindungsanordnung mit der ersten Fluidverbindung und mit der zweiten Fluidverbindung verbunden ist, und wobei die Verbindungsanordnung eine Ventilanordnung aufweist, wobei die Ventilanordnung derart an die erste und die zweite Fluidverbindung und an den Drucksensor angeschlossen ist, dass der Drucksensor den Minimaldruck der in den Fluidverbindungen anliegenden Fluiddrücke erfasst, wobei die Ventilanordnung fluidbetätig ist. Ferner wird die Aufgabe durch ein Verfahren zum Ansteuern einer Doppelkupplungsanordnung mittels einer solchen Aktuatoranordnung gelöst.

Durch diese Maßnahme ist es möglich, die Aktuatoranordnung mit nur einem einzelnen Drucksensor zu realisieren, so dass die Aktuatoranordnung deutlich kostengünstiger aufgebaut werden kann.

Durch eine Verbindungsanordnung dieser Art lässt sich zudem eine Funktionalität implementieren, die hinsichtlich Regelungsgüte und Funktionssicherheit nicht deutlich schlechter ist als eine Lösung mit einem Drucksensor für jede Reibkupplung. Dies liegt daran, dass eine hohe Regelgüte in den allermeisten Betriebssituationen nur bei einer der beiden Kupplungen erforderlich ist.

Ferner ist auch bei weiteren Funktionen wie z.B. der Adaption der Kupplungsdruck-Kennlinie, einer Kisspunkt-Adaption oder einer Überwachung des Schutzziels "unzulässiges Bedrucken beider Kupplungen" in der Regel ebenfalls nur die Messung eines Kupplungsdruckes erforderlich.

Beispielsweise kann hierbei der Druck der inaktiven, d.h. der geringer bedruckten Kupplung erfasst werden.

Die Aufgabe wird somit vollkommen gelöst.

Gemäß einer erfinderischen Ausführungsform, weist die Verbindungsanordnung eine Ventilanordnung auf.

Mittels einer Ventilanordnung ist es möglich, den einzelnen Drucksensor entweder mit der ersten oder mit der zweiten Fluidverbindung zu verbinden. Hierdurch kann gewährleistet werden, dass der Drucksensor jeweils zur Erfassung des Druckes in einer der Fluidverbindungen verwendet wird.

Es lassen sich jedoch mittels einer Ventilanordnung auch weitere Funktionen der Fluiddrücke in den Fluidverbindungen realisieren.

Erfindungsgemäß ist die Ventilanordnung fluidbetätigt.

Hierdurch kann die Betätigung der Ventilanordnung anhand der in den Fluidverbindungen vorherrschenden Drücke realisiert werden, so dass keine aufwändige Steuer- oder Regeleinrichtung erforderlich ist.

Dabei ist die Ventilanordnung gemäß einer Ausführungsform derart an die erste und die zweite Fluidverbindung und an den Drucksensör angeschlossen, dass der Drucksensor den Minimaldruck der in den Fluidverbindungen anliegenden Fluiddrücke erfasst.

Unter dem Minimaldruck soll jeweils der niedrigere der Fluiddrücke in den Fluidverbindungen verstanden werden. Dies ist bei einem Doppelkupplungsgetriebe in der Regel der Fluiddruck jener Fluidverbindung, die der gerade inaktiven Reibkupplung zugeordnet ist. In einer bevorzugten Ausführungsform erfasst der einzelne Drucksensor somit einen Minimaldruck, welcher erfasste Minimaldruck zum Kalibrieren der gerade inaktiven Reibkupplung verwendet wird. In dieser Ausführungsform erfolgt die Regelung der aktiven Reibkupplung nicht mit dem aktuell erfassten Minimaldruck in einer Fluidverbindung, sondern durch ein Prädiktionsmodell, wo mit Soll- und Istwerten des Doppelkupplungsgetriebes wie Lastmoment, Reibwert, Differenzdrehzahl, usw. geregelt wird.

Gemäß einer weiteren Ausführungsform ist die Ventilanordnung derart an die erste und die zweite Fluidverbindung und an den Drucksensor angeschlossen, dass der Drucksensor den Maximaldruck der in den Fluidverbindungen anliegenden Fluiddrücke erfasst.

Unter dem Maximaldruck soll jeweils der höhere der zwei Drücke in den Fluidverbindungen verstanden werden.

Ferner ist gemäß einer weiteren Ausführungsform die Ventilanordnung derart an die erste und die zweite Fluidverbindung und an den Drucksensor angeschlossen, dass der Drucksensor den Differenzdruck zwischen den in den Fluidverbindungen anliegenden Fluiddrücken erfasst.

Gemäß einer weiteren bevorzugten Ausführungsform ist die Verbindungsanordnung derart an die erste und die zweite Fluidverbindung und an den Drucksensor angeschlossen und so ausgebildet, dass der Drucksensor einen Mittelwertdruck der in den Fluidverbindungen anliegenden Fluiddrücke erfasst.

Bei dieser Ausführungsform kann die Verbindungsanordnung auch ohne Ventil ausgebildet sein. Beispielsweise kann die Verbindungsanordnung Blenden aufweisen, die die Fluidverbindungen mit dem einzelnen Drucksensor verbinden.

Der Mittelwertdruck kann ein einfacher Mittelwertdruck sein, der den Mittelwert der zwei Fluiddrücke darstellt. Der Mittelwertdruck kann jedoch auch ein gewichteter Mittelwertdruck sein.

Generell ist es möglich, dass jede der oben beschriebenen Ausführungsform für sich genommen in einer Aktuatoranordnung für einen Kraftfahrzeug-Antriebstrang realisiert ist, wobei die Ausführungsform aufgrund der Anforderungen an Schutzziele, Regelgenauigkeiten etc. ausgewählt wird.

Gemäß einer bevorzugten Ausführungsform ist die Verbindungsanordnung jedoch zwischen wenigstens zwei Zuständen umschaltbar, wobei der Drucksensor in dem einen Zustand einen Minimaldruck, einen Maximaldruck, einen Differenzdruck oder einen Mittelwertdruck erfasst, und wobei der Drucksensor in dem anderen Zustand einen anderen Druck von Minimaldruck, Maximaldruck, Differenzdruck und Mittelwertdruck erfasst.

Bei dieser Ausführungsform werden wenigstens zwei Ventilanordnungen bzw. Verbindungsanordnungen der oben beschriebenen Art miteinander kombiniert, so dass je nach Betriebssituation eine andere Ventilanordnung bzw. Verbindungsanordnung mit dem Drucksensor verbunden werden kann.

Besonders bevorzugt ist es, wenn eine fluidgesteuerte Umschalteinrichtung die Verbindungsanordnung zwischen den zwei Zuständen umschaltet.

Hierdurch kann ohne Eingriff durch eine Steuer- oder Regelungseinrichtung jeweils der "richtige" Fluiddruck gemessen werden.

Beispielsweise ist es denkbar, oberhalb einer Fluiddruckschwelle (von z.B. 1 bar) einen Minimaldruck zu erfassen, und unterhalb dieser Fluiddruckschwelle einen Maximaldruck.

Ferner ist es möglich, die Verbindungsanordnung mit wenigstens einem Zeitglied auszustatten, das so angeschlossen ist, dass die Umschaltung zwischen den Zuständen durch das Zeitglied beeinflusst wird.

Hierdurch kann auf das Bereitstellen einer komplizierten Ablaufsteuerung verzichtet werden.

Insgesamt ist es ferner vorteilhaft, wenn die Fluidversorgungseinrichtung wenigstens ein mit einer der Fluidverbindungen gekoppeltes Sicherheitsventil aufweist, das auslösbar ist, um den Druck in dieser Fluidverbindung zu verringern (vorzugsweise schlagartig zu verringern, um die zugeordnete Reibkupplung schnell zu öffnen), wobei das Sicherheitsventil derart an die Verbindungsanordnung angeschlossen ist, dass der Drucksensor bei ausgelöstem Sicherheitsventil den in der anderen Fluidverbindung anliegenden Fluiddruck erfasst.

Hierdurch kann erreicht werden, dass bspw. bei einem Reset, bei dem das Sicherheitsventil der einen Reibkupplung ausgelöst wird, um diese Reibkupplung schnellstmöglich zu öffnen, gewährleistet ist, dass für die Zeit des Resets (oder für die Zeit einer folgenden Störung) zumindest zeitweise der Fluiddruck in der anderen Fluidverbindung gemessen werden kann.

Gemäß einer weiteren bevorzugten Ausführungsform sind die Fluidversorgungseinrichtung und die Verbindungsanordnung über eine Koppeleinrichtung derart miteinander verbunden, dass der Drucksensor direkt mit einem Druckregelventil der Fluidversorgungseinrichtung verbindbar ist.

Durch die Koppeleinrichtung, die bspw. durch eine Anordnung von Rückschlagventilen gebildet sein kann, ist es möglich, den Drucksensor bei geeigneter Ansteuerung der Fluidversorgungseinrichtung direkt mit dem Ausgang von einem der Druckregelventile zu verbinden, um auf diese Weise eine Kupplungskalibrierung oder eine Kupplungskennlinieneinstellung oder eine Kisspunkt-Adaption durchführen zu können.

Bei den obigen Ausführungsformen versteht sich, dass die Verbindungsanordnung zwischen zwei oder mehr Zuständen umschaltbar sein kann.

Ferner versteht sich, dass in einer bevorzugten Ausführungsform jeder der zwei Fluidverbindungen ein Sicherheitsventil zugeordnet ist.

Schließlich versteht sich, dass die Fluidversorgungseinrichtung auf verschiedene Art und Weise realisiert werden kann, bspw. in klassischer Form mit einer geregelten Druckquelle, die einen Leitungsdruck erzeugt, aus dem die jeweiligen Fluiddrücke in den Fluidleitungen abgeleitet werden (mittels jeweiliger Druckregelventile). Alternativ ist es auch möglich, die Fluidverbindungen jeweils mit einem Druckanschlüss einer elektromotorisch angetriebenen Pumpe zu verbinden, wobei der Druck in der Fluidleitung dann durch Einstellen der Drehzahl des jeweiligen Elektromotors eingestellt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeug-Antriebsstranges mit einer Ausführungsform einer erfindungsgemäßen Aktuatoranordnung;
- Fig. 2: eine schematische Darstellung einer weiteren Ausführungsform einer nicht erfindungsgemäßen Aktuatoranordnung;
- Fig. 3: ein Diagramm von Druck über Zeit bei einer Überschneidungsschaltung;
- Fig. 4: ein der Fig. 3 entsprechendes Diagramm unter Verwendung einer Verzögerungseinrichtung;
- Fig. 5: eine schematische Darstellung einer weiteren Ausführungsform einer nicht erfindungsgemäßen Aktuatoranordnung; und
- Fig. 6: eine schematische Darstellung einer weiteren Ausführungsform einer nicht erfindungsgemäßen Aktuatoranordnung.

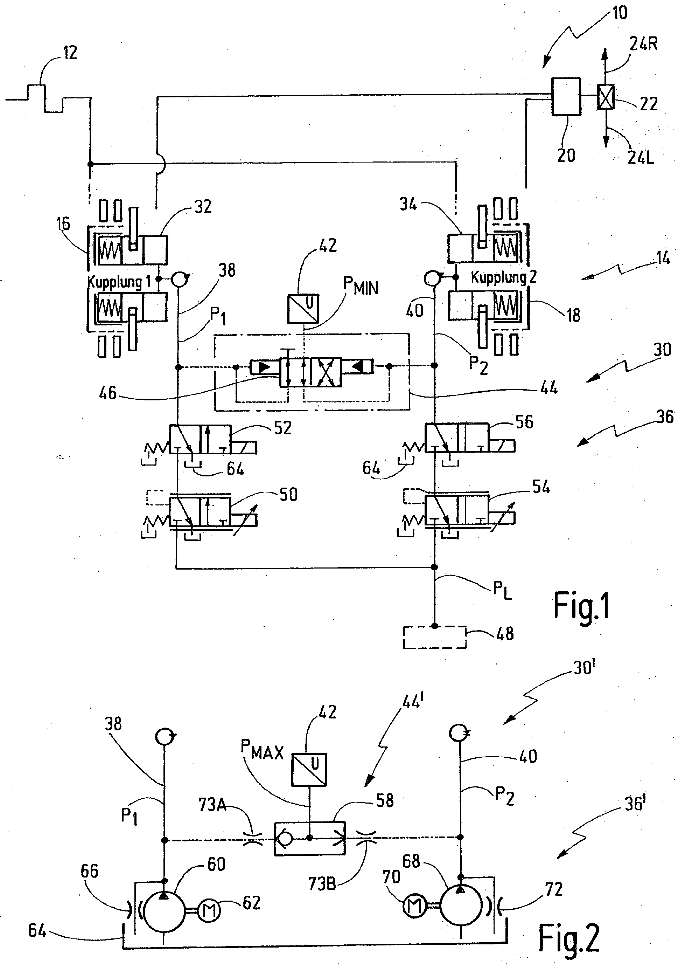

In Fig. 1 ist ein Antriebsstrang für ein Kraftfahrzeug schematisch dargestellt und generell mit 10 bezeichnet.

Der Antriebsstrang 10 weist einen Antriebsmotor 12 auf, dessen Ausgang mit einem Eingangsglied einer Doppelkupplungsanordnung 14 verbunden ist. Die Doppelkupplungsanordnung 14 weist eine erste Reibkupplung 16 und eine zweite Reibkupplung 18 (trockene Reibkupplung oder nass laufende Lamellenkupplung) auf. Ausgangsglieder der zwei Reibkupplungen 16, 18 sind mit einem Getriebe 20 verbunden, das zwei Teilgetriebe aufweist und als Doppelkupplungsgetriebe ausgebildet ist. Ein Ausgang des Getriebes 20 ist mit einem Differential 22 verbunden, mittels dessen Antriebsleistung auf zwei angetriebene Räder 24L, 24R des Kraftfahrzeugs verteilt wird.

Zur Betätigung der Doppelkupplungsanordnung 14 ist eine Aktuatoranordnung 30 vorgesehen. Die Aktuatoranordnung 30 weist einen ersten Fluidzylinder 32 auf, dessen Kolben auf die erste Reibkupplung 16 wirkt. Ferner weist die Aktuatoranordnung 30 einen zweiten Fluidzylinder 34 auf, dessen Kolben auf die zweite Reibkupplung 18 wirkt. Die Reibkupplungen 16, 18 sind vorzugsweise normalerweise offene Reibkupplungen, die mittels einer in Fig. 1 schematisch angedeuteten Federanordnung in eine geöffnete Position vorgespannt sind.

Ferner beinhaltet die Aktuatoranordnung 30 eine Fluidversorgungseinrichtung 36. Der erste Fluidzylinder 32 ist über eine erste Fluidverbindung 38 mit der Fluidversorgungseinrichtung 36 verbunden. Der zweite Fluidzylinder 34 ist über eine zweite Fluidverbindung 40 mit der Fluidversorgungseinrichtung 36 verbunden.

Über die Fluidversorgungseinrichtung 36 wird in der ersten Fluidverbindung 38 ein erster Druck P₁ erzeugt. Ferner wird über die Fluidversorgungseinrichtung 36 in der zweiten Fluidverbindung 40 ein zweiter Fluiddruck P₂ erzeugt.

Die Aktuatoranordnung 30 weist ferner einen einzelnen Drucksensor 42 auf, der einen Druck in einer Fluidleitung erfasst und in eine Spannung oder in eine andere elektrische Größe umsetzt, die zu regelungstechnischen Zwecken verwendbar ist.

Der einzelne Drucksensor 42 ist über eine Verbindungsanordnung 44 sowohl mit der ersten Fluidverbindung 38 als auch mit der zweiten Fluidverbindung 40 verbunden.

Bei der Ausführungsform der Fig. 1 beinhaltet die Verbindungsanordnung 44 ein Ventil 46, das den Drucksensor 42 mit jener Fluidverbindung 38, 40 verbindet, in der der kleinere Druck vorherrscht (P_{MIN}). Vorliegend ist dieses Ventil durch ein 4-2-Wegeventil realisiert, das beidseitig fluidbetätigt ist. In der einen Schaltrichtung wirkt der Druck P₁, in der anderen Schaltrichtung der Druck P₂. Wenn der Druck P₂ bspw. größer ist als P₁, wird das Wegeventil 46 in Fig. 1 nach links verschoben, so dass die erste Fluidverbindung 38 (mit dem Druck P₁) mit dem Drucksensor 42 verbunden wird, wohingegen die zweite Fluidverbindung 40 von dem Drucksensor 42 getrennt wird. Wenn der Druck P₁ größer ist als P₂, wird das Ventil nach rechts verschoben, so dass die zweite Fluidverbindung 40 mit dem Drucksensor 42 verbunden und die erste Fluidverbindung 38 von dem Drucksensor 42 getrennt wird.

Hierdurch wird erreicht, dass der Drucksensor den Minimaldruck P_{MIN} der in den Fluidverbindungen anliegenden Fluiddrücke P₁, P₂ erfasst.

Die Fluidversorgungseinrichtung 36 weist bei der Ausführungsform der Fig. 1 eine geregelte Druckquelle 48 auf, die einen Leitungsdruck P_{L} bereitstellt. Ferner weist die Fluidversorgungseinrichtung 36 ein erstes Druckminderventil 50 auf, das als Proportionalventil ausgebildet ist, und ein erstes Sicherheitsventil 52, das als einfaches Wegeventil ausgebildet ist. Die erste Fluidverbindung 38 ist über das erste Sicherheitsventil 52 und das erste Druckminderventil 50 mit dem Leitungsdruck P_{L} verbunden.

In entsprechender Weise weist die Fluidversorgungseinrichtung 36 ein zweites Druckminderventil 54 und ein zweites Sicherheitsventil 56 auf. Die zweite Fluidverbindung 40 ist über das zweite Sicherheitsventil 56 und das zweite Druckminderventil 54 mit den Leitungsdruck P_{L} verbunden.

Das erste Druckminderventil 50 regelt den ersten Fluiddruck P₁. Das zweite Druckminderventil 54 regelt den zweiten Fluiddruck P₂. Im Falle eines Reset können das erste und/oder das zweite Sicherheitsventil 52, 56 ausgelöst werden, so dass die jeweils zugeordnete Fluidverbindung 38, 40 mit einem Tank 64 verbunden wird. Hierzu können die Sicherheitsventile 52, 56 bspw. so ausgestaltet sein, dass sie in einer Grundstellung (die in Fig. 1 gezeigt ist) die Fluidverbindungen 38, 40 jeweils mit dem Tank verbinden. Eine Verbindung zwischen dem jeweiligen Druckminderventil 50, 54 und der zugeordneten Fluidverbindung 38, 40 wird erst dann eingerichtet, wenn das zugeordnete Sicherheitsventil 52, 56 bestromt wird.

Durch die Sicherheitsventile kann gewährleistet werden, dass im Falle eines Reset (Wegfall der Spannungsversorgung) die Kupplungen 16, 18 sofort drucklos geschaltet werden und öffnen. Alternativ ist es auch möglich, dass sich ein Reset nur auf eine der Kupplungen 16, 18 bezieht.

In Fig. 2 ist eine alternative Ausführungsform einer Aktuatoranordnung 30' gezeigt. Diese entspricht hinsichtlich Aufbau und Funktionsweise generell der Aktuatoranordnung 30 der Fig. 1. Gleiche Elemente sind daher mit gleichen Bezugszeichen versehen. Im Folgenden werden im Wesentlichen die Unterschiede erläutert.

Bei der Aktuatoranordnung 30' weist die Verbindungsanordnung 44' ein Wechselventil 58 auf, dessen Mittenabgriff mit dem Drucksensor 42 verbunden ist und dessen Anschlüsse mit der ersten bzw. der zweiten Fluidverbindung 38, 40 verbunden sind. Durch das Wechselventil 58 wird erreicht, dass der Drucksensor 42 jeweils mit jener Fluidverbindung 38, 40 verbunden wird, in der der höhere Druck vorherrscht. Der Drucksensor 42 erfasst folglich den Maximaldruck P_{MAX} der in den Fluidverbindungen 38, 40 anliegenden Fluiddrücke P₁, P₂.

Ferner beinhaltet die Aktuatoranordnung 30' eine alternative Ausführungsform einer Fluidversorgungseinrichtung 36'. Die Fluidversorgungseinrichtung 36' weist eine erste Pumpe 60 auf, die mittels eines ersten Elektromotors 62 antreibbar ist. Ein Druckanschluss der ersten Pumpe 60 ist mit der ersten Fluidverbindung 38 verbunden. Ein Sauganschluss der ersten Pumpe 60 ist mit einem Tank verbunden. Ferner ist der Druckanschluss der ersten Pumpe 60 über eine erste Blende 66 mit dem Tank verbunden. Der Druck P₁ in der ersten Fluidverbindung 38 wird durch Einstellen der Drehzahl des ersten Elektromotors 62 eingestellt.

In entsprechender Weise weist die Fluidversorgungseinrichtung 36' zur Einstellung des Druckes P₂ in der zweiten Fluidverbindung 40 eine zweite Pumpe 68 auf, die mittels eines zweiten Elektromotors 70 antreibbar ist. Der Druckanschluss der zweiten Pumpe 68 ist mit der zweiten Fluidverbindung 40 verbunden. Der Sauganschluss der zweiten Pumpe 68 ist mit dem Tank 64 verbunden. Ferner ist der Druckanschluss der zweiten Pumpe 68 über eine zweite Blende 72 mit dem Tank verbunden.

Durch das Bereitstellen der Blenden 66, 72 kann das Regelverhalten und/oder das Ansprechverhalten der Fluidversorgungseinrichtung 36' verbessert werden.

Ferner ist in Fig. 2 eine Verzögerungseinrichtung dargestellt, die vorliegend durch zwei hydraulische Blenden 73A, 73B realisiert ist. Die Blenden 73A, 73B sind zwischen den Anschlüssen der Verbindungsanordnung 44' und den Fluidverbindungen 38, 40 vorgesehen. Diese Verzögerungseinrichtung kann optional verwendet werden, wenn der Zeitpunkt des Umschaltens der Druckmessung von dem Druck in der einen Fluidverbindung zu dem Druck in der anderen Fluidverbindung zeitverzögert erfolgen soll, also nicht mit dem Zeitpunkt zusammenfallen soll, zu dem die Drücke P₁, P₂ identisch sind.

Die zwei Blenden 73A, 73B können auch bei der Ausführungsform der Fig. 1 verwendet werden, in diesem Fall vorzugsweise direkt vor den hydraulischen Steuereingängen des Wegeventils 46.

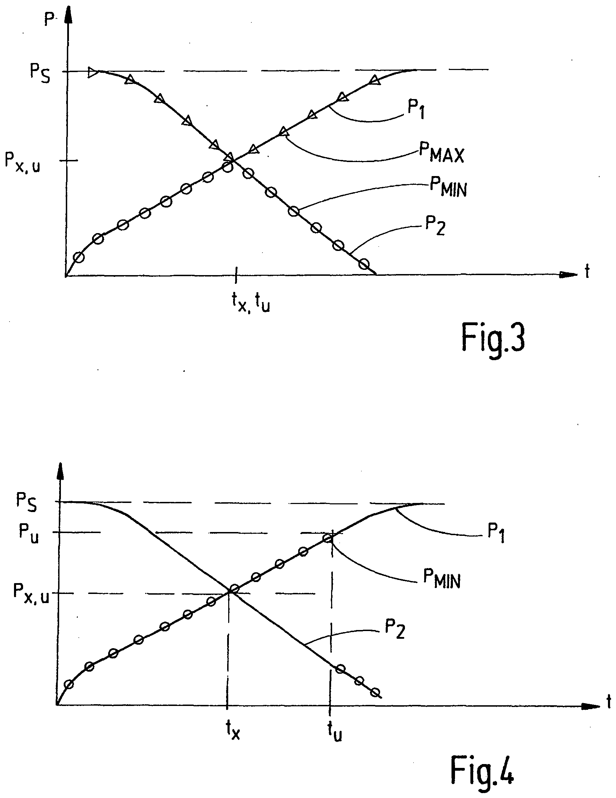

Zur Erläuterung der Funktionsweise dieser Verzögerungseinrichtung in Form der zwei Blenden 73A, 73B wird zunächst anhand von Fig. 3 der zeitliche Verlauf der Druckmessung bei einer überschneidenden Kupplungsbetätigung für den Fall dargestellt, dass eine derartige Verzögerungseinrichtung nicht vorgesehen ist. Man erkennt, dass der Druck P₁ über der Zeit ansteigt und der Druck P₂ über der Zeit abfällt. Zu einem Zeitpunkt kann tₓ sind die Drücke identisch, entsprechend einem Übergabedruck Pₓ.

Ferner ist in Fig. 3 der Druck P_{MIN} dargestellt, der bei der Ausführungsform der Fig. 1 gemessen wird. Man erkennt, dass bis zum Zeitpunkt tₓ der Druck P₁ gemessen wird, und ab dem Zeitpunkt tₓ der Druck P₂. In entsprechender Weise kann bei der Ausführungsform der Fig. 2 der Druck P_{MAX} gemessen werden, also bis zum Zeitpunkt tₓ der Druck P₂ und ab dem Zeitpunkt tₓ der Druck P₁. Der Zeitpunkt tₓ entspricht dabei einem Umschaltzeitpunkt t_{U} der Verbindungsanordnung bzw. der Ventile 46, 58.

In Fig. 4 ist ein entsprechender Verlauf der Drücke P₁, P₂ dargestellt. Bei dieser Ausführungsform wird wiederum der minimale Druck P_{MIN} von dem Drucksensor 42 gemessen, wobei jedoch eine Verzögerungseinrichtung in Form der zwei Blenden 73A, 73B vorgesehen ist. Durch die jeweils aktive Blende 73A, 73B wird die Umsteuerung des Ventils 46 verlangsamt, so dass das Ventil erst zu einem späteren Zeitpunkt t_{U} umschaltet, der nicht mit dem Zeitpunkt tₓ der Druckidentität zusammenfällt.

Hierdurch kann in vorteilhafter Weise erreicht werden, dass die Regelung des Schaltablaufs über die gesamte Zeit der Überschneidung an einer Kupplung stattfindet, bspw. der schließenden Kupplung. Vorteilhafterweise ist der einzelne Drucksensor bei diesem Schaltablauf über die Verbindungsanordnung mit der Fluidverbindung der schließenden Kupplung verbunden, da beim Schließen der Kupplung wesentlich höhere Anforderungen an die Regelungsgüte erforderlich sind. Zumindest solange die sich öffnende Kupplung nicht eingerückt ist, überträgt die schließende Kupplung ein höheres Kupplungsmoment. Die Doppelkupplungsanordnung ist mit positivem Reibwertverlauf über dem Schlupf ausgelegt, bei dem mit abnehmender Drehzahl der Reibwert und somit auch das Kupplungsmoment abnimmt. Wenn nun aber aufgrund von Verschleiß, mechanischen Toleranzen, Setzen der Kupplungsfedern, usw. kein solcher positiver Reibwertverlauf der schließenden Kupplung vorliegt, sondern bspw. ein negativer Reibwertverlauf, so muss dieser negative Reibwertverlauf durch aktive Regelung korrigiert werden. In einer anderen Ausführungsvariante kann dies auch die sich öffnende Kupplung sein.

Diese Ausführungsform eignet sich bspw. für Fahrzeugtypen, die mit hohen Leistungsanforderungen arbeiten und demgemäß hohe Kupplungsdrücke benötigen.

Bei der Ausführungsform der Fig. 1 kann auch die Fluidversorgungseinrichtung 36' der Fig. 2 verwendet werden. Ferner kann auch bei den nachfolgenden Ausführungsformen jeweils alternativ die Fluidversorgungseinrichtung 36 der Fig. 1 oder die Fluidversorgungseinrichtung 36' der Fig. 2 verwendet werden.

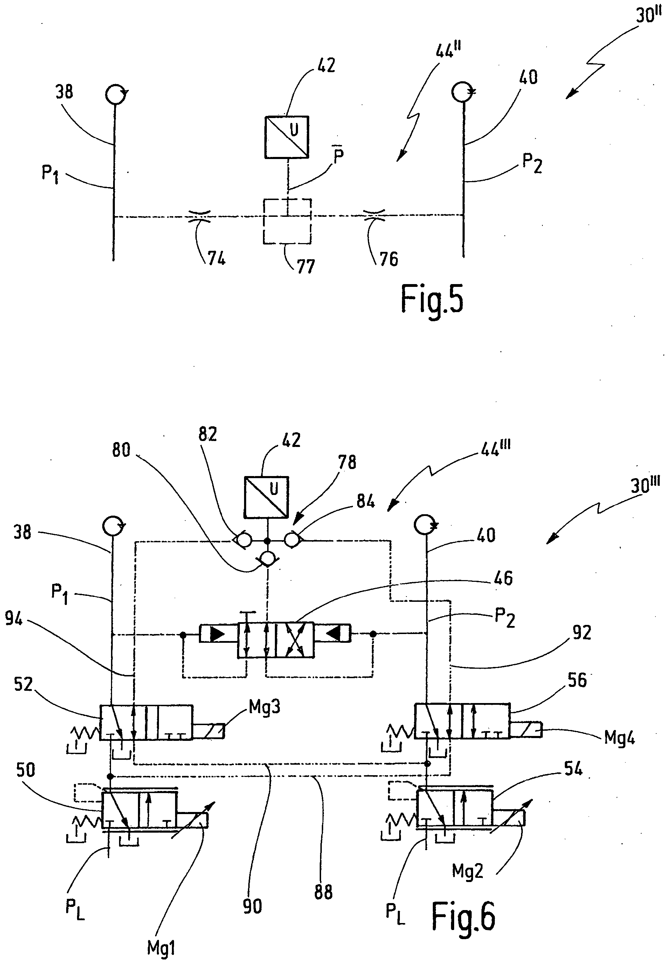

Fig. 5 zeigt einen Teil einer weiteren Ausführungsform einer Aktuatoranordnung 30". Bei der Aktuatoranordnung 30" weist die Verbindungsanordnung 44" eine erste Verbindungsblende 74 auf, die die erste Fluidverbindung 38 mit dem Drucksensor 42 verbindet. Ferner weist die Verbindungsanordnung 44" eine zweite Verbindungsblende 76 auf, die die zweite Fluidverbindung 40 mit dem Drucksensor 42 verbindet.

Bei dieser Ausführungsform ermittelt der Drucksensor 42 einen Mittelwertdruck, der sich durch einen einfachen oder einen gewichteten Mittelwert (je nach Größe der Verbindungsblenden 74, 76) definieren lässt. Bei dieser Ausführungsform erfasst der Drucksensor 42 folglich einen Mittelwertdruck *P̅* zwischen den in den Fluidverbindungen 38, 40 anliegenden Fluiddrücken P₁, P₂.

Es versteht sich, dass eine Verbindungsanordnung 44 anstelle des Maximaldrucks P_{MAX}. des Minimaldrucks P_{MIN} oder des Mittelwertdrucks *P̅* auch einen Differenzdruck zwischen den zwei Fluiddrücken P₁, P₂ bereitstellen kann, obgleich dies in den Figuren nicht näher dargestellt ist.

Ferner versteht sich, dass die drei Aktuatoranordnungen 30, 30', 30" der Figuren 1 bis 3 auch miteinander kombiniert werden können.

Zu diesem Zweck kann eine Umschalteinrichtung 77 vorgesehen sein, die die unterschiedlichen Verbindungsanordnungen 44, 44', 44" alternativ mit dem Drucksensor 42 verbindet, so dass die Gesamtverbindungsanordnung zwischen wenigstens zwei Zuständen umschaltbar ist.

Ferner versteht sich, dass in die Verbindungsanordnung auch ein Zeitglied integriert sein kann, das so angeschlossen ist, dass die Umschaltung zwischen den Zuständen durch das Zeitglied beeinflusst wird.

In Fig. 6 ist eine weitere Ausführungsform einer Aktuatoranordnung 30'" gezeigt. Diese entspricht hinsichtlich Aufbau und Funktionsweise generell der Aktuatoranordnung 30 der Fig. 1. Gleiche Elemente sind daher durch gleiche Bezugszeichen gekennzeichnet. Im Folgenden werden im Wesentlichen die Unterschiede erläutert.

Bei der Aktuatoranordnung 30"' ist in der Verbindungsanordnung 44"' zusätzlich zu dem 4-2-Wegeventil 46 eine Koppeleinrichtung 78 vorgesehen. Die Koppeleinrichtung 78 dient vorliegend insbesondere dazu, einen Zustand zu erzeugen, bei dem eine Kupplungseinstellung bzw. Kisspunkt-Einstellung erfolgen kann. Insbesondere dient die Koppeleinrichtung 78 dazu, mit dem Drucksensor 42 unmittelbar den durch ein jeweiliges Druckminderventil 50, 54 erzeugten Druck zu messen, um bspw. eine Kisspunkt-Adaption durchzuführen. Vorliegend weist die Koppeleinrichtung 78 drei Rückschlagventile 80, 82, 84 auf. Ein erstes Rückschlagventil 80 verbindet das Ventil 46 mit dem Drucksensor 42. Ein zweites Rückschlagventil 82 verbindet das erste Sicherheitsventil 52 über eine Leitung 94 mit dem Drucksensor 42. Ein drittes Rückschlagventil 84 verbindet das zweite Sicherheitsventil 56 über eine Leitung 92 mit dem Drucksensor 42. Ferner weist das erste Sicherheitsventil 52 einen Eingang auf, der über eine Leitung 90 mit dem Ausgang des zweiten Druckminderventils 54 verbunden ist, und das zweite Sicherheitsventil 56 weist einen Eingang auf, der über eine Leitung 88 mit dem Ausgang des ersten Druckminderventils 50 verbunden ist.

Im Normalbetrieb ist die Koppeleinrichtung 78 im Wesentlichen funktionslos, da die Sicherheitsventile 52, 56 beide über jeweilige Magnete Mg3, Mg4 bestromt sind, so dass die Leitungen 92, 94 im Wesentlichen drucklos sind (allenfalls ist ein kleiner Staudruck vorhanden). Der an dem ersten Rückschlagventil 80 anliegende Druck ist in jedem Fall höher als die Drücke in den Leitungen 92, 94, so dass der Drucksensor 42 mit dem Wegeventil 46 verbunden ist, und folglich mit dem niedrigeren der zwei Drücke P1, P2. Die zwei Rückschlagventile 82, 84 sind in diesem Fall geschlossen. Die Koppeleinrichtung 78 wird aktiviert, um eine Kupplungsposition bzw. einen Kisspunkt von jeweils einer der zwei Kupplungen 16, 18 zu adaptieren bzw. um die Kupplungskennlinie einzustellen. Im Folgenden wird dies anhand eines Einstellungsvorganges für die erste Reibkupplung 16 beschrieben. Der beschriebene Prozess kann jedoch in gleicher Weise auf die zweite Reibkupplung angewendet werden.

Zunächst wird der Magnet Mg2 des zweiten Druckminderventils 54 weitgehend zurückgefahren, und der Magnet Mg4 des zweiten Sicherheitsventils 56 wird vollständig abgeschaltet (wird stromlos). Hingegen wird das erste Sicherheitsventil 52 über den Magneten Mg3 vollständig geöffnet, und der Magnet Mg1 des ersten Druckminderventils 50 wird weitgehend ausgefahren.

Hierdurch liegt bspw. am Ausgang des Druckminderventils 50 ein Druck von 3 bar an, während der Druck an der zweiten Reibkupplung 18 bspw. auf 0,5 bar abfällt.

Aufgrund dieser Druckdifferenz schaltet das Ventil 46 die in Fig. 6 dargestellte linke Seite auf Durchfluss (so wie in Fig. 6 dargestellt), und an dem ersten Rückschlagventil 80 liegt der kleinere dieser beiden Drücke an. Andererseits ist das dritte Rückschlagventil 84 über die Leitung 92 und die Leitung 90 direkt mit dem Ausgang des Druckminderventils 50 verbunden, so dass dort der beispielhafte Druck von 3 bar ansteht. Aufgrund des Öffnens des ersten Sicherheitsventils 52 liegt an dem zweiten Rückschlagventil 82 ebenfalls nur ein innerer Staudruck an, der bspw. kleiner ist als 0,5 bar, z.B. 0,2 bar.

Demzufolge schaltet in diesem Fall das dritte Rückschlagventil 84 durch, und die anderen Rückschlagventile 80, 82 werden gesperrt. Demzufolge wird der Drucksensor 42 direkt mit dem Ausgang des ersten Druckminderventils 50 verbunden.

Wenn man nun den Magneten Mg1 leicht in seiner Steuergröße verändert, so strömt mehr Hydraulikfluid in die erste Fluidverbindung 38. Demzufolge verändert sich auch der am Drucksensor 42 gemessene Druck als Maß für den Kupplungsdruck in der ersten Kupplung 16. Demzufolge kann bei dieser Einstellung die erste Kupplung 16 eingestellt, insbesondere deren Kisspunkt adaptiert werden.

Dies kann in entsprechender Weise auch für die zweite Kupplung 18 erfolgen, indem die Ventile 50 bis 56 jeweils umgekehrt angesteuert werden.

## Patentansprüche

1. Aktuatoranordnung (30) für einen Kraftfahrzeug-Antriebsstrang (10), insbesondere für eine Doppelkupplungsanordnung (14), mit einem ersten Fluidzylinder (32), der über eine erste Fluidverbindung (38) mit einer Fluidversorgungseinrichtung (36) verbunden ist, mit einem zweiten Fluidzylinder (34), der über eine zweite Fluidverbindung (40) mit der Fluidversorgungseinrichtung (36) verbunden ist, und mit einer Druckmessanordnung (42), wobei die Druckmessanordnung einen einzelnen Drucksensor (42) aufweist, der über eine Verbindungsanordnung (44) mit der ersten Fluidverbindung (38) und mit der zweiten Fluidverbindung (40) verbunden ist, wobei die Verbindungsanordnung (44) eine Ventilanordnung (46; 58) aufweist, und wobei die Ventilanordnung (46) derart an die erste und die zweite Fluidverbindung (38, 40) und an den Drucksensor (42) angeschlossen ist, dass der Drucksensor (42) den Minimaldruck (P_{MIN}) der in den Fluidverbindungen (38, 40) anliegenden Fluiddrücke (P₁, P₂) erfasst,
**dadurch gekennzeichnet, dass** die Ventilanordnung (46; 58) fluidbetätigt ist.

2. Aktuatoranordnung nach Anspruch 1, **dadurch gekennzeichnet, dass** der Minimaldruck (P_{MIN}) zum Kalibrieren der gerade inaktiven Reibkupplung der Doppelkupplungsanordnung (14) verwendet wird.

3. Aktuatoranordnung nach Anspruch 1 oder 2, **dadurch gekennzeichnet, dass** die Verbindungsanordnung (44) zwischen wenigstens zwei Zuständen umschaltbar ist, wobei der Drucksensor (42) in dem einen Zustand den Minimaldruck (P_{MIN}) erfasst, und wobei der Drucksensor (42) in dem anderen Zustand einen anderen Druck von Maximaldruck (P_{MAX}), Differenzdruck und Mittelwertdruck (*P̅*) der in den Fluidverbindungen (38, 40) anliegenden Fluiddrücke (P₁, P₂) erfasst.

4. Aktuatoranordnung nach Anspruch 3, **dadurch gekennzeichnet, dass** eine fluidgesteuerte Umschalteinrichtung (77) die Verbindungsanordnung (44) zwischen den wenigstens zwei Zuständen umschaltet.

5. Aktuatoranordnung nach einem der Ansprüche 1 - 4, **dadurch gekennzeichnet, dass** die Verbindungsanordnung (44) wenigstens ein Zeitglied (73) aufweist, das so angeschlossen ist, dass die Umschaltung zwischen den Zuständen oder der Verbindungsanordnung (44) durch das Zeitglied (73) beeinflusst wird.

6. Aktuatoranordnung nach einem der Ansprüche 1 - 5, **dadurch gekennzeichnet, dass** die Fluidversorgungseinrichtung (36) wenigstens ein mit einer der Fluidverbindungen (38, 40) gekoppeltes Sicherheitsventil (52, 54) aufweist, das auslösbar ist, um den Druck (P₁, P₂) in dieser Fluidverbindung (38, 40) zu verringern, wobei das Sicherheitsventil (52, 54) derart an die Verbindungsanordnung (44) angeschlossen ist, dass der Drucksensor (42) bei ausgelöstem Sicherheitsventil (52, 54) den in der anderen Fluidverbindung anliegenden Fluiddruck erfasst.

7. Aktuatoranordnung nach einem der Ansprüche 1 - 6, **dadurch gekennzeichnet, dass** die Fluidversorgungseinrichtung (36) und die Verbindungsanordnung über eine Koppeleinrichtung (78) derart miteinander verbunden sind, dass der Drucksensor (42) direkt mit einem Druckregelventil (50, 52) der Fluidversorgungseinrichtung (36) verbindbar ist.

8. Aktuatoranordnung nach einem der Ansprüche 1 - 7, **dadurch gekennzeichnet, dass** der Drucksensor (42) bei einem Schaltablauf über die Verbindungsanordnung (44) mit der Fluidverbindung der schließenden Reibkupplung der Doppelkupplungsanordnung verbunden ist.

9. Verfahren zum Ansteuern einer Doppelkupplungsanordnung (14) mittels einer Aktuatoranordnung (30), wobei die Aktuatoranordnung (30) versehen ist mit einem ersten Fluidzylinder (32), der über eine erste Fluidverbindung (38) mit einer Fluidversorgungseinrichtung (36) verbunden ist, mit einem zweiten Fluidzylinder (34), der über eine zweite Fluidverbindung (40) mit der Fluidversorgungseinrichtung (36) verbunden ist, und mit einer Druckmessanordnung (42), wobei die Druckmessanordnung einen einzelnen Drucksensor (42) aufweist, der über eine Verbindungsanordnung (44) mit der ersten Fluidverbindung (38) und mit der zweiten Fluidverbindung (40) verbunden ist, und wobei die Verbindungsanordnung (44) eine Ventilanordnung (46; 58) aufweist, wobei die Ventilanordnung (46) derart an die erste und die zweite Fluidverbindung (38, 40) und an den Drucksensor (42) angeschlossen ist, dass der Drucksensor (42) den Minimaldruck (P_{MIN}) der in den Fluidverbindungen (38, 40) anliegenden Fluiddrücke (P₁, P₂) erfasst, **dadurch gekennzeichnet, dass** die Ventilanordnung (46; 58) fluidbetätigt ist.

10. Verfahren nach Anspruch 9, wobei der Minimaldruck (P_{MIN}) zum Kalibrieren der gerade inaktiven Reibkupplung der Doppelkupplungsanordnung (14) verwendet wird.

## Claims

1. An actuator arrangement (30) for a motor vehicle drivetrain (10), in particular for a dual-clutch arrangement (14), having a first fluid cylinder (32) which is connected via a first fluid connection (38) to a fluid supply device (36), having a second fluid cylinder (34) which is connected via a second fluid connection (40) to the fluid supply device (36), and having a pressure measuring arrangement (42), wherein the pressure measuring arrangement has a single pressure sensor (42) which is connected by means of a connecting arrangement (44) to the first fluid connection (38) and to the second fluid connection (40), wherein the connecting arrangement (44) has a valve arrangement (46; 58), and wherein the valve arrangement (46) is connected to the first and second fluid connections (38, 40) and to the pressure sensor (42) such that the pressure sensor (42) detects the minimum pressure (P_{MIN}) out of the fluid pressures (P₁, P₂) prevailing in the fluid connections (38, 40),
**characterized in that** the valve arrangement (46; 58) is fluid-actuated.

2. The actuator arrangement as claimed in claim 1, **characterized in that** the minimum pressure (P_{MIN}) is used for calibration of the presently inactive friction clutch of the dual-clutch arrangement (14).

3. The actuator arrangement as claimed in claim 1 or 2, **characterized in that** the connecting arrangement (44) is switchable between at least two states, wherein, in one state, the pressure sensor (42) detects den minimum pressure (P_{MIN}), and wherein, in the other state, the pressure sensor (42) detects another pressure out of maximum pressure (P_{MAX}), pressure difference and mean pressure (*P̅*) of the fluid pressures (P₁, P₂) prevailing in the fluid connections (38, 40).

4. The actuator arrangement as claimed in claim 3, **characterized in that** a fluidcontrolled switching device (77) switches the connecting arrangement (44) between the at least two states.

5. The actuator arrangement as claimed in one of claims 1 to 4, **characterized in that** the connecting arrangement (44) has at least one timing element (73) which is connected such that the switching between the states or of the connecting arrangement (44) is influenced by the timing element (73).

6. The actuator arrangement as claimed in one of claims 1 to 5, **characterized in that** the fluid supply device (36) has at least one safety valve (52, 54) which is coupled to one of the fluid connections (38, 40) and which can be triggered in order to reduce the pressure (P₁, P₂) in said fluid connection (38, 40), wherein the safety valve (52, 54) is connected to the connecting arrangement (44) such that, when the safety valve (52, 54) is triggered, the pressure sensor (42) detects the fluid pressure prevailing in the other fluid connection.

7. The actuator arrangement as claimed in one of claims 1 to 6, **characterized in that** the fluid supply device (36) and the connecting arrangement are connected to one another by means of a coupling device (78) such that the pressure sensor (42) can be connected directly to the pressure regulating valve (50, 52) of the fluid supply device (36).

8. The actuator arrangement as claimed in one of claims 1 to 7, **characterized in that**, during a switching process, the pressure sensor (42) is connected by means of the connecting arrangement (44) to the fluid connection of the closing friction clutch of the dual-clutch arrangement.

9. A method for the control of a dual-clutch arrangement by means of an actuator arrangement (30), wherein the actuator arrangement (30) is provided with a first fluid cylinder (32) which is connected via a first fluid connection (38) to a fluid supply device (36), with a second fluid cylinder (34) which is connected via a second fluid connection (40) to the fluid supply device (36), and with a pressure measuring arrangement (42), wherein the pressure measuring arrangement has a single pressure sensor (42) which is connected by means of a connecting arrangement (44) to the first fluid connection (38) and to the second fluid connection (40), and wherein the connecting arrangement (44) has a valve arrangement (46; 58), wherein the valve arrangement (46) is connected to the first and second fluid connections (38, 40) and to the pressure sensor (42) such that the pressure sensor (42) detects the minimum pressure (P_{MIN}) out of the fluid pressures (P₁, P₂) prevailing in the fluid connections (38, 40), **characterized in that** the valve arrangement (46; 58) is fluid-actuated.

10. The method as claimed in claim 9, wherein the minimum pressure (P_{MIN}) is used for calibration of the presently inactive friction clutch of the dual-clutch arrangement (14).

## Revendications

1. Agencement d'actionneur (30) pour une chaîne cinématique de véhicule automobile (10), en particulier pour un agencement de double embrayage (14), comprenant un premier cylindre fluidique (32), qui est connecté par le biais d'une première liaison fluidique (38) à un dispositif d'alimentation en fluide (36), comprenant un deuxième cylindre fluidique (34) qui est connecté par le biais d'une deuxième liaison fluidique (40) au dispositif d'alimentation en fluide (36), et comprenant un agencement de mesure de pression (42), l'agencement de mesure de pression présentant un capteur de pression individuel (42) qui est connecté par le biais d'un agencement de connexion (44) à la première liaison fluidique (38) et à la deuxième liaison fluidique (40), l'agencement de connexion (44) présentant un agencement de soupape (46 ; 58) et l'agencement de soupape (46) étant raccordé à la première et à deuxième liaison fluidique (38, 40) et au capteur de pression (42), de telle sorte que le capteur de pression (42) détecte la pression minimale (P_{MIN}) des pressions de fluide (P₁, P₂) s'appliquant dans les liaisons fluidiques (38, 40),
**caractérisé en ce que** l'agencement de soupape (46 ; 58) est commandé par fluide.

2. Agencement d'actionneur selon la revendication 1, **caractérisé en ce que** la pression minimale (P_{MIN}) est utilisée pour calibrer l'embrayage à friction, à ce moment inactif, de l'agencement de double embrayage (14).

3. Agencement d'actionneur selon la revendication 1 ou 2, **caractérisé en ce que** l'agencement de connexion (44) peut être commuté entre au moins deux états, le capteur de pression (42) détectant, dans un état, la pression minimale (P_{MIN}), et le capteur de pression (42) détectant, dans l'autre état, une autre pression parmi la pression maximale (P_{MAX}), la pression différentielle et la pression moyenne (P̅) des pressions de fluide (P₁, P₂) s'appliquant dans les liaisons fluidiques (38, 40).

4. Agencement d'actionneur selon la revendication 3, **caractérisé en ce qu'**un dispositif de commutation à commande fluidique (77) commute l'agencement de connexion (44) entre les au moins deux états.

5. Agencement d'actionneur selon l'une quelconque des revendications 1 à 4, **caractérisé en ce que** l'agencement de connexion (44) présente au moins un organe de temporisation (73) qui est raccordé de telle sorte que la commutation entre les états ou l'agencement de connexion (44) soit influencée par l'organe de temporisation (73).

6. Agencement d'actionneur selon l'une quelconque des revendications 1 à 5, **caractérisé en ce que** le dispositif d'alimentation en fluide (36) présente au moins une soupape de sécurité (52, 54) accouplée à l'une des liaisons fluidiques (38, 40), qui peut être déclenchée pour réduire la pression (P₁, P₂) dans cette liaison fluidique (38, 40), la soupape de sécurité (52, 54) étant raccordée à l'agencement de connexion (44) de telle sorte que le capteur de pression (42) détecte la pression de fluide s'appliquant dans l'autre liaison fluidique lorsque la soupape de sécurité (52, 54) est déclenchée.

7. Agencement d'actionneur selon l'une quelconque des revendications 1 à 6, **caractérisé en ce que** le dispositif d'alimentation en fluide (36) et l'agencement de connexion sont connectés l'un à l'autre par le biais d'un dispositif d'accouplement (78) de telle sorte que le capteur de pression (42) puisse être connecté directement à une soupape de régulation de la pression (50, 52) du dispositif d'alimentation en fluide (36).

8. Agencement d'actionneur selon l'une quelconque des revendications 1 à 7, **caractérisé en ce que** le capteur de pression (42), en cas de déroulement d'une commutation par le biais de l'agencement de connexion (44), est connecté à la liaison fluidique de l'embrayage à friction se fermant de l'agencement de double embrayage.

9. Procédé de commande d'un agencement de double embrayage (14) au moyen d'un agencement d'actionneur (30), l'agencement d'actionneur (30) étant pourvu d'un premier cylindre fluidique (32) qui est connecté par le biais d'une première liaison fluidique (38) à un dispositif d'alimentation en fluide (36), d'un deuxième cylindre fluidique (34), qui est connecté par le biais d'une deuxième liaison fluidique (40) au dispositif d'alimentation en fluide (36), et d'un agencement de mesure de pression (42), l'agencement de mesure de pression présentant un capteur de pression individuel (42), qui est connecté par le biais d'un agencement de connexion (44) à la première liaison fluidique (38) et à la deuxième liaison fluidique (40), et l'agencement de connexion (44) présentant un agencement de soupape (46 ; 58), l'agencement de soupape (46) étant raccordé à la première et à la deuxième liaison fluidique (38, 40) et au capteur de pression (42), de telle sorte que le capteur de pression (42) détecte la pression minimale (P_{MIN}) des pressions fluidiques (P₁, P₂) s'appliquant dans les liaisons fluidiques (38, 40), **caractérisé en ce que** l'agencement de soupape (46 ; 58) est commandé par fluide.

10. Procédé selon la revendication 9, dans lequel la pression minimale (P_{MIN}) est utilisée pour calibrer l'embrayage à friction, à ce moment inactif, de l'agencement de double embrayage (14).
